# EUROPEAN PATENT SPECIFICATION

(11) **EP 3 992 063 B1**
(45) Date of publication and mention of the grant of the patent: **18.06.2025**
(21) Application number: 21205019.9
(22) Date of filing: 27.10.2021
(51) Int. Cl.: B62D 53/06, B62D 53/08, B60D 1/44

(54) **TRANSLIFTER FOR MOVING LOADS THAT ARE ON A LOAD PLATFORM**
TRANSLIFTER POUR DÉPLACER DES CHARGES QUI SE TROUVENT SUR UNE PLATE-FORME DE CHARGEMENT
TRANSLIFTER ZUM BEWEGEN VON LASTEN, DIE AUF EINER LASTPLATTFORM SIND

(30) Priority: 30.10.2020 FI 20206089
(43) Date of publication of application: 04.05.2022
(73) Proprietor: Movella Oy, 33720 Tampere (FI)
(72) Inventor: KUKKOLA, Hannu, 37560 Lempäälä (FI)
(74) Representative: Salomäki, Juha Kari Ensio

(56) References cited:
- EP-A1- 1 022 165
- EP-A2- 0 081 190
- WO-A1-00/64700
- CN-A- 103 922 241
- CN-A- 107 585 081
- FI-A1- 20 205 754
- JP-A- 2002 182 744
- US-A1- 2008 071 429
- US-B1- 9 873 300

## Description

### FIELD OF THE INVENTION

The object of the present invention is a translifter as defined in the preamble of claim 1.

The translifter according to the invention is intended for handling large loads in, *inter alia,* industrial production and storage premises, as well as in ports in which ships are loaded and unloaded. Translifters differ in structure and according to intended usage but what they share in common is that they are intended according to their size, shape and weight for the short-distance transfer of goods that are awkward to transfer. Examples of such goods include products of the concrete and steel industry as well as intermodal containers used in goods transportation. The loads to be handled by translifters are often long and e.g. 50-200 tonnes in weight.

Translifters are elongated trailers movable by means of a traction machine, the load-bearing part of the translifters being moved essentially in the vertical direction, generally hydraulically, for taking a load along with it and for lowering the load onto its platform. A load can be on load platforms, such as trestles or a special cassette, beneath which the body of the translifter is driven when it is desired that the translifter takes the load with it. When lifting the body of the translifter upwards, the cassette or trestles detach from their bed and the load remains supported on the translifter. The load platform thus also rises along with the translifter in this case. If the load is an intermodal container resting on side trestles, the translifter is driven under the container between the side trestles. When the container is lifted supported by the body of the translifter, the side trestles remain in their position. The side trestles in this case form the aforementioned load platform.

Although the embodiments describing the invention present only two types of translifter that differ in appearance and the use of these translifters in conjunction with load platforms provided with a transferrable load, the solution according to the invention relates just as well to all types of translifters and it can also be applied in other solutions used for transferring loads.

### BACKGROUND OF THE INVENTION

In solutions known in the art, there is generally a rigid drawbar on the tractor side of the translifter body, the drawbar being coupled to the fifth wheel of the tractor. The drawbar is longitudinal to the body of a translifter and cannot be separately turned. The main drawbacks of prior art relate in this case to fitting the elongated body of a translifter to align with an essentially long load platform when taking a load platform to be carried by the translifter or when leaving the load platform off the trailer. When reversing under a load platform, such as a cassette, or driving out from under it, the driver must control the tractor precisely in order to avoid the trailer body making contact with the cassette. Efficient driving requires skill and experience and, even when these are sufficient, collisions occur and extra maintenance is needed when a trailer collides with, or scrapes, the inside surface of a cassette. In particular, the widenings at the front end, i.e. the tractor end, of the trailer that are intended for transporting a cassette easily collide with the end of the cassette because in devices known in the art only the rear end of the trailer is provided with sensors. By means of sensors and steerable trailer wheels, the rear of the trailer is kept in the center of the cassette tunnel or at least away from the walls. The driver must therefore take care of steering the front end of the trailer without auxiliary means. Another problem is that when exiting from under a cassette a driver must drive in a straight line for almost the entire length of the cassette before being able to turn, which requires a very long space. Yet another problem, particularly on ships, is that the cassettes must be left close up against each other.

In prior art document FI 20205754 A is described a translifter comprising a chassis provided with wheels and a lifting mechanism. The translifter can be connected to a separate hauling vehicle by means of a draw bar and a coupling device which is located at a distal end of the draw bar. The translifter is further provided with at least two load sensing devices for determining load of the cargo. The load sensing devices are located at a longitudinal distance from each other.

### AIM OF THE INVENTION

The aim of the present invention is to provide a type of translifter with which the drawbacks occurring in prior art are avoided and a solution is achieved by the aid of which the translifter can more easily be driven under elongated load platforms, such as load-bearing cassettes, and can also easily be driven away from under them. The translifter according to the invention is characterized by what is disclosed in the characterization part of claim 1. Other embodiments of the invention are characterized by what is disclosed in the other claims.

### BRIEF DESCRIPTION OF THE INVENTION

A translifter for moving essentially heavy and/or large-sized loads that are on a load platform, the translifter comprising an elongated body provided with wheels, which body is arranged to be driven under a load on a load platform, and also a lifting mechanism for moving the body upwards and downwards in a vertical direction and a drawbar provided with a hitch point on the first end of the body for connecting the translifter to a tractor. Preferably the translifter comprises a transfer mechanism for displacing the location of the hitch point in the lateral direction away from the longitudinal center line of the translifter.

### ADVANTAGES OF THE INVENTION

The advantages of the solution according to the invention are, *inter alia:*
- the driver's work is easier and faster when it is easier to drive under a load platform, such as a cassette, and away from under it,
- less damage to equipment and less need for maintenance,
- smaller space requirements if cassettes must be left e.g. at a 90-degree angle to the driving route,
- leaving a load platform in the correct place is easier, e.g. on a ship where load platforms must be tight up against each other,
- an apparatus for weighing the load can easily be fitted to the hinge,
- providing the flanks of the translifter body with sensors and the connection of them to the control system makes the driver's work easier.

The major advantage of the invention is that alignment of the load platform and the trailer body is achieved without to-and-fro or corrective movements of the trailer. When using the invention, long experience or especially high precision or skilfulness are not required of the driver. This situation is achieved with the inventive devices fitted to the structure of the trailer body and, in practice, that means a reduction in equipment damage and faster operation.

Another significant advantage with respect to prior art is a saving in space, since e.g. when exiting from under a load platform, such as a cassette, there is no need to drive in a straight line for such a long distance. This can be achieved with a sufficiently large control movement of the drawbar, with which movement the location of the hitch point of the trailer with respect to the longitudinal center line of the trailer can be displaced in the lateral direction of the trailer. In this case the driver of the tractor can start to turn the tractor earlier than in the case of devices according to prior art.

### LIST OF FIGURES

In the following, the invention will be described in greater detail by the aid of some embodiments and by referring to the attached simplified drawings, wherein
- Fig. 1: presents an oblique view from above of one translifter according to the invention,
- Fig. 2: presents a top view of the translifter according to Fig. 1,
- Fig. 3: presents a top view of one drawbar on the front end of a translifter according to the invention,
- Fig. 4: presents a top view of a drawbar, according to a second embodiment of the invention, on the front end of a translifter,
- Fig. 5: presents a top view of a drawbar according to Fig. 3, in its first position,
- Fig. 6: presents a top view of a drawbar according to Fig. 3, in its second position in which the hitch point is displaced to the side from the longitudinal center line of the trailer,
- Fig. 7: presents a top view of a drawbar according to Fig. 4, in its first position,
- Fig. 8: presents a top view of a drawbar according to Fig. 4, in its second position in which the hitch point is displaced to the side from the longitudinal center line of the trailer,
- Fig. 9: presents one example of space usage with the solution according to the invention,
- Fig. 10: presents a corresponding example of space usage with a solution according to prior art.

### DETAILED DESCRIPTION OF THE INVENTION

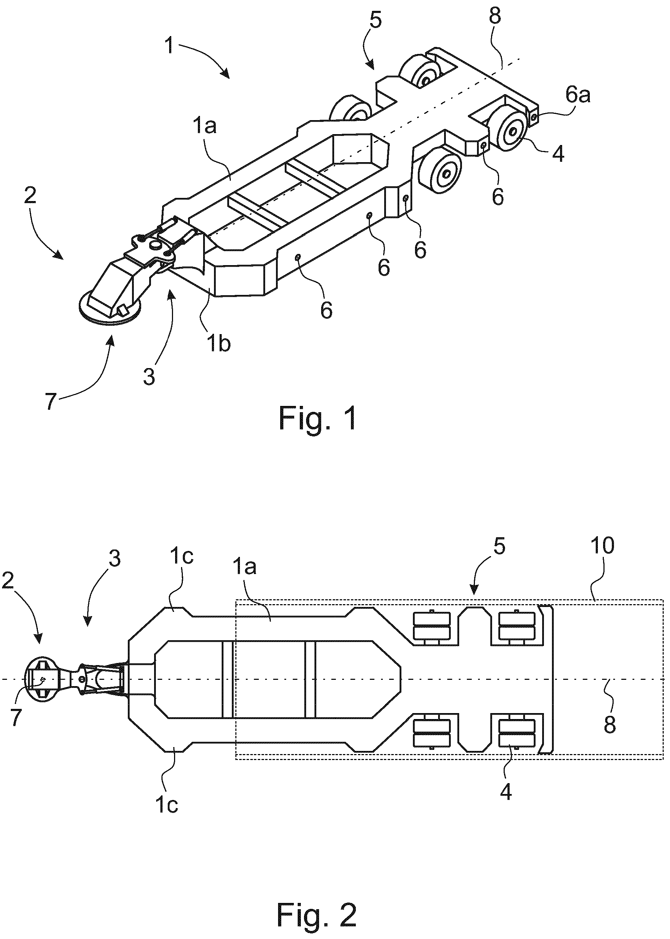

Fig. 1 presents one translifter according to the invention, as viewed obliquely from above and Fig. 2 a top view of the same translifter. The translifter 1 comprises an elongated body 1a provided with steerable wheels 4 and also a lifting mechanism 5 for moving the rear part of the body 1a up and down in a vertical direction. Usually the wheels 4 are on the rear part of the body 1a, but the wheels can also be on the front part and/or the center part of the trailer. A drawbar 2 is fitted to the front end 1b of the translifter body 1a, the drawbar comprising a transfer mechanism 3. The translifter 1 is arranged to be fastened from the hitch point 7 of the drawbar 2 to a traction machine, which is e.g. a tractor used in articulated vehicles or corresponding, a tractor modified for this purpose, or a tractor or some other traction machine suited to the purpose. The front end 1b of the body 1a is arranged to be movable up and down in the vertical direction by means of the tractor. Usually the tractor has a fifth wheel that is arranged to raise and lower the front end 1b of the body 1a of the trailer. Usually the functions of the trailer are moved by means of hydraulics and the power source is generally a hydraulic powerpack disposed on a tractor. The trailer body 1a is lowered by means of the fifth wheel of the tractor and the lifting mechanism 5 of the rear part from its normal transport position downwards before fitting the body 1a under the load platform and lifting upwards when the load platform is in position. By means of the solution according to the invention, the body 1a, and especially the front end and center part of the body, can be kept essentially in the center with respect to the load platform, or at least the body 1a can be prevented from hitting the edges of the load platform. Also collision of the rear part of the body 1a with the edges of the load platform can be prevented.

The body 1a of the translifter preferably comprises one or more sensing means 6, such as a sensor, with which the position of the body 1a of the trailer in the lateral direction with respect to the load platform, such as a cassette, is measured. The sensors can be e.g. ultrasound sensors, such as those on the rear part of trailers known in the art, laser sensors, inductive sensors, inductive switches, limit switches, mechanical contact switches or machine vision means. If a laser scanner or machine vision is used, then the actual sensing means is usually located on the front end of the body. Preferably the sensing means 6 is/are disposed at least on the flanks of the body 1a in the center area, in which case the trailer body can easily be kept in the center of e.g. a cassette tunnel. There can be sensing means also on the front part and rear part of the body. Preferably, in connection with the translifter 1 are control & adjustment means for using the measuring data received from the sensing means 6 for changing the position of the hitch point 7 in the lateral direction with respect to the center line 8 of the translifter 1. These control & adjustment means give the tractor driver instructions for displacing the location of the hitch point 7 in the lateral direction with respect to the center line 8 of the translifter 1, and/or the control & adjustment means displace the hitch point 7 automatically. The automatic control & adjustment means comprise e.g. a microcontroller or corresponding control means, into which a program intended to control and adjust the trailer is programmed.

On the rear part of the translifter 1 are sensing means 6a, which are arranged to measure the position of the rear part of the trailer with respect to a cassette or other load platform. By means of these sensing means 6a, steerable wheels 4 and automation, the rear end of the trailer is guided so that it does not hit the load platform.

In the situation of Fig. 2, the translifter 1 is being driven inside a cassette 10 functioning as a load platform. For the sake of clarity, the cassette 10 is presented in the figure with a dashed line. This translifter 1 has widenings 1c on the front part of the trailer, which widenings easily collide with the end or edges of the cassette 10 when the trailer is driven into or out of it. The front-end widenings refer to the broader part of the body at the drawbar end. In this embodiment the center part and rear part of the trailer also have widenings that protect the wheels 4. Trailers are generally wider at their front and rear ends, and narrower at the midpoint of the body. Impacts against the widenings and the trailer wheels 4 easily occur if the driver reverses under the cassette 10 carelessly. The solution according to the invention endeavours to solve this problem, among others.

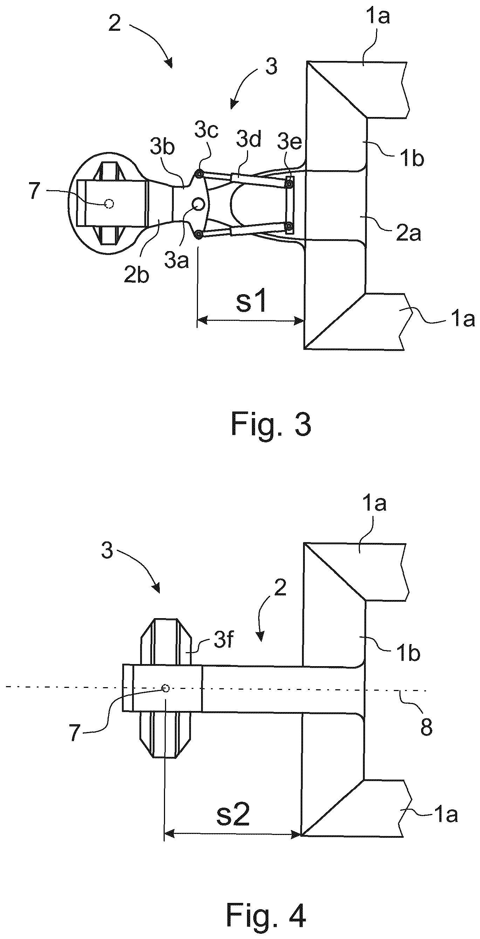

Fig. 3 presents a top view of one drawbar according to the invention on the front end of a translifter. The first part 2a of the drawbar is fastened to the front end 1b of the body 1a of the trailer 1 and the second part 2b of the drawbar 2 is connected at its hitch point 7 to a tractor. The first part 2a and the second part 2b of the drawbar are connected to each other by means of the transfer mechanism 3. The transfer mechanism 3 comprises an essentially vertical pivot pin 3a and at least one, preferably two, actuators 3d, such as hydraulic cylinders, the first fixing points 3c of which are situated on the second part 2b of the drawbar and the second fixing points 3e of which on the first part 2a of the drawbar 2. The pivot pin 3a of the transfer mechanism is at the horizontal distance s1 from the first end 1b of the body of the translifter 1.

Fig. 4 presents a top view of a drawbar according to a second embodiment of the invention on the front end of a translifter. In this embodiment the transfer mechanism 3 comprises a lateral transfer means 3f, which is arranged to displace the hitch point 7 in the lateral direction away from the center line 8 of the trailer. The transfer mechanism 3 is at a horizontal distance s2 from the first end 1b of the body of the translifter 1, which horizontal distance is greater than the horizontal distance s1 in the embodiment of Fig. 3. The lateral transfer means 3f comprises e.g. a hydraulic cylinder and rails, or corresponding guide means, by means of which the hitch point 7 is shifted.

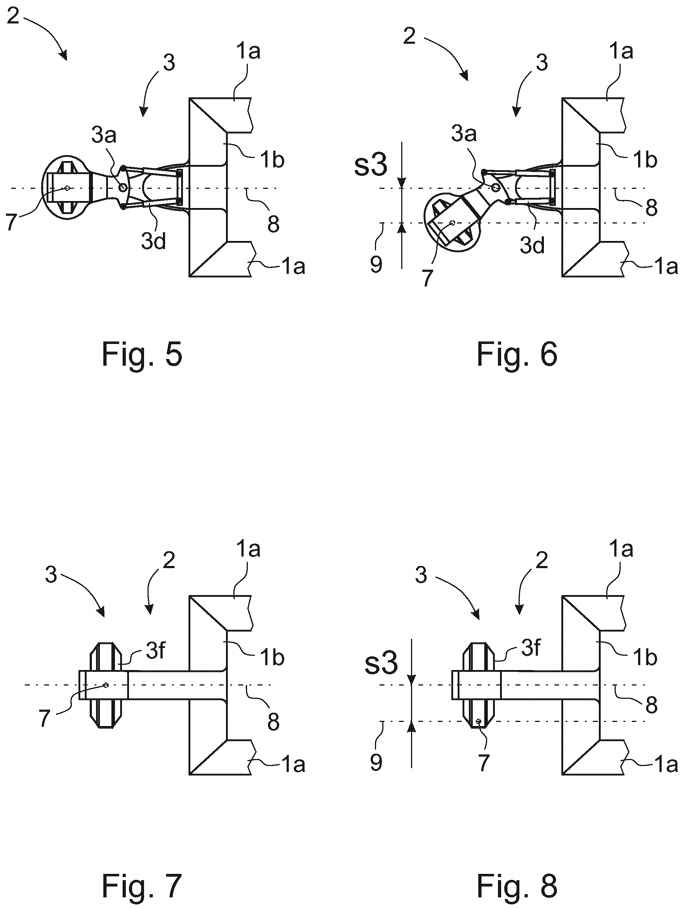

Figs. 5 and 6 present a top view of the drawbar according to Fig. 3 on the front end of a translifter. The second part 2b of the drawbar is fitted to turn horizontally in relation to the first part 2a of the drawbar around the pivot pin 3a, by means of an actuator 3d, such as a hydraulic cylinder, for displacing the location of the hitch point 7 in the lateral direction away from the longitudinal center line 8 of the translifter 1. In Fig. 5 the drawbar 2 is in its first position, in which case the hitch point 7 is on the longitudinal center line 8 of the translifter 1. In Fig. 6 the drawbar 2 is in its second position, in which case the hitch point 7 is displaced to the extent of the horizontal distance s3 from the longitudinal center line 8 of the trailer 1 to the line 9.

Figs. 7 and 8 present a drawbar according to Fig. 4 as viewed from above. The transfer mechanism 3 of the hitch point 7 is at the free end of the drawbar 2 and comprises a lateral transfer means 3f for displacing the location of the hitch point 7 in the lateral direction away from the longitudinal center line 8 of the translifter 1. In Fig. 7 the drawbar 2 is in its first position, in which case the hitch point 7 is on the longitudinal center line 8 of the translifter 1. In Fig. 8 the drawbar 2 is in its second position, in which case the hitch point 7 is displaced to the extent of the horizontal distance s3 from the longitudinal center line 8 of the trailer 1 to the line 9.

The transfer mechanism of the hitch point 7 is arranged to be controlled by means of hydraulics and usually the hydraulic powerpack is disposed on the tractor. The translifter 1 can comprise pressure accumulators or corresponding means, owing to which the hydraulic powerpack does not necessarily need to be started up separately each time if the hitch point 7 or the rear end of the trailer needs to be moved a little.

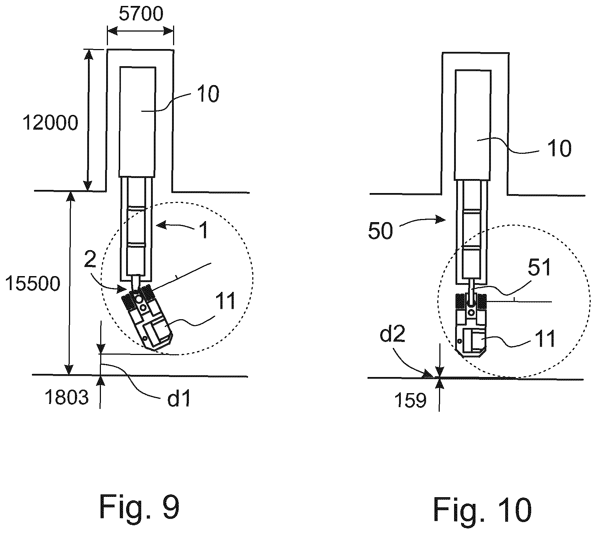

Fig. 9 presents one example of space usage when leaving a load platform 10 and driving the trailer away from linkage with the load platform 10 with the solution according to the invention. In a sizable space typical of a storage space, with a translifter 1 according to the invention, which is provided with a turnable drawbar 2, the distance d1 remaining between the tractor 11 and the wall is 1803 mm. In a situation corresponding to that in Fig. 10 with a translifter 50 according to what is known in the art, the translifter having a rigid drawbar 51, the distance d2 remaining between the tractor 11 and the wall is only 159 mm.

It is obvious to the person skilled in the art that different embodiments of the invention are not limited to the example described above, but that they may be varied within the scope of the claims presented below. Thus, for example, the translifter and load platform can also be different to what is presented above. Instead of a cassette, for example, also another type of load cradle can be used which can be driven into in the same manner.

It is also obvious to the person skilled in the art that the sensing means can also be e.g. a proximity sensor, camera or some other corresponding means. For example, one or more cameras can function as sensing means that transmit a video image to the tractor driver who, by the aid of the video image, can control the position and movement of the translifter.

It is further obvious to the person skilled in the art that the pivot pin 3a can be situated also in some other suitable location, instead of the drawbar, such as in the front part of the translifter body.

## Claims

1. A translifter for moving essentially heavy and/or large-size loads that are on a load platform, the translifter (1) comprising an elongated body (1a) provided with wheels (4), which body is arranged to be driven under a load on a load platform, and also a lifting mechanism (5) for moving the body (1a) upwards and downwards in an essentially vertical direction and a drawbar (2) provided with a hitch point (7) on the first end of the body (1a) for connecting the translifter (1) to a tractor, **characterized in that** the translifter (1) comprises a transfer mechanism (3) for displacing the location of the hitch point (7) in the lateral direction away from the longitudinal center line (8) of the translifter (1), and that the transfer mechanism (3) of the hitch point (7) is at the free end of the drawbar (2) and comprises a lateral transfer means (3f) for displacing the location of the hitch point (7) in the lateral direction away from the longitudinal center line (8) of the translifter (1).

2. A translifter according to claim 1, **characterized in that** the transfer mechanism (3) is on the drawbar (2).

3. A translifter according to claim 1 or 2, **characterized in that** the transfer mechanism (3) is between the body (1a) and the tractor (11) moving the translifter (1).

4. A translifter according to claim 1, 2 or 3, **characterized in that** the drawbar (2) comprises a first part (2a), which is fastened to the front end (1b) of the body (1a) of the translifter (1), and a second part (2b), which is connected to the first part (2a) with a transfer mechanism (3) pivoting in relation to the first part (2a).

5. A translifter according to claim 4, **characterized in that** the transfer mechanism (3) is an articulation mechanism comprising an essentially vertical pivot pin (3a) and at least one actuator (3d) for pivoting the second part (2b) of the drawbar (2) in relation to the first part (2a) of the drawbar (2) around the pivot pin (3a).

6. A translifter according to claim 5, **characterized in that** the pivot pin (3a) is at a horizontal distance (s1) from the first end (1b) of the body (1a) of the translifter (1).

7. A translifter according to any of the preceding claims, **characterized in that** on the body (1a) of the translifter (1) are one or more sensing means (6) for measuring the position of the body (1a) with respect to the load platform, such as a cassette (10), bearing the load.

8. A translifter according to claim 7, **characterized in that** the sensing means (6) are on one or more outer flanks of the body (1a) of the translifter (1).

9. A translifter according to claim 7 or 8, **characterized in that** at least one sensing means (6) is situated in the longitudinal direction essentially in the central area of the body (1a) of the translifter (1).

10. A translifter according to any of the preceding claims, **characterized in that** at least one sensing means (6) is a laser scanner or machine vision, which is located on the front end of the body (1a).

11. A translifter according to any of the preceding claims 7-10, **characterized in that** in connection with the translifter (1) are means for using the measuring data received from the sensing means (6) for changing the position of the hitch point (7) in the lateral direction with respect to the center line (8) of the translifter (1).

12. A translifter according to any of the preceding claims 7-11, **characterized in that** in connection with the translifter (1) are control & adjustment means for using the measuring data received from the sensing means (6) for automatically changing the position of the hitch point (7) in the lateral direction with respect to the center line (8) of the translifter (1).

## Patentansprüche

1. Ein Translifter zum Bewegen von im Wesentlichen schweren und/oder großen Lasten, die sich auf einer Ladeplattform befinden, wobei der Translifter (1) eine längliche Karosserie (1a) umfasst, die mit Rädern (4) versehen ist, wobei die Karosserie so angeordnet ist, dass sie unter einer Last auf einer Ladeplattform angetrieben wird, und auch einen Hebemechanismus (5) zum Bewegen der Karosserie (1a) nach oben und nach unten in einer im Wesentlichen vertikalen Richtung und eine Deichsel (2), die mit einem Anhängepunkt (7) am vorderen Ende der Karosserie (1a) versehen ist, um den Translifter (1) mit einem Zugfahrzeug zu verbinden, **dadurch gekennzeichnet, dass** der Translifter (1) einen Versetzungsmechanismus (3) zum Verschieben der Position des Anhängepunktes (7) in der seitlichen Richtung weg von der Längsmittellinie (8) des Translifters (1) umfasst, und dass der Versetzungsmechanismus (3) des Anhängepunktes (7) am freien Ende der Deichsel (2) ist und ein seitliches Versetzungsmittel (3f) zum Verschieben der Position des Anhängepunktes (7) in der seitlichen Richtung weg von der Längsmittellinie (8) des Translifters (1) umfasst.

2. Ein Translifter nach Anspruch 1, **dadurch gekennzeichnet, dass** sich der Versetzungsmechanismus (3) an der Deichsel befindet (2).

3. Ein Translifter nach Anspruch 1 oder 2, **dadurch gekennzeichnet, dass** sich der Versetzungsmechanismus (3) zwischen der Karosserie (1a) und dem Zugfahrzeug (11) befindet, das den Translifter (1) bewegt.

4. Ein Translifter nach Anspruch 1, 2 oder 3, **dadurch gekennzeichnet, dass** die Deichsel (2) einen ersten Teil (2a), der am vorderen Ende (1b) der Karosserie (1a) des Translifters (1) befestigt ist, und einen zweiten Teil (2b) umfasst, der mit dem ersten Teil (2a) über einen in Bezug auf den ersten Teil (2a) schwenkbaren Versetzungsmechanismus (3) verbunden ist.

5. Ein Translifter nach Anspruch 4, **dadurch gekennzeichnet, dass** der Versetzungsmechanismus (3) ein Gelenkmechanismus ist, der einen im Wesentlichen vertikalen Drehzapfen (3a) und mindestens ein Stellglied (3d) zum Schwenken des zweiten Teils (2b) der Deichsel (2) in Bezug auf den ersten Teil (2a) der Deichsel (2) um den Drehzapfen (3a) umfasst.

6. Ein Translifter nach Anspruch 5, **dadurch gekennzeichnet, dass** sich der Drehzapfen (3a) in einem horizontalen Abstand (s1) vom vorderen Ende (1b) der Karosserie (1a) des Translifters (1) befindet.

7. Ein Translifter nach einem der vorhergehenden Ansprüche, **dadurch gekennzeichnet, dass** auf der Karosserie (1a) des Translifters (1) ein oder mehrere Sensorvorrichtungen (6) zur Messung der Position der Karosserie (1a) in Bezug auf die Ladeplattform, wie z. B. eine Kassette (10), die die Last trägt, angeordnet sind.

8. Ein Translifter nach Anspruch 7, **dadurch gekennzeichnet, dass** sich die Sensorvorrichtungen (6) an einer oder mehreren Außenflächen der Karosserie (1a) des Translifters (1) befinden.

9. Ein Translifter nach Anspruch 7 oder 8, **dadurch gekennzeichnet, dass** mindestens eine Sensorvorrichtung (6) in Längsrichtung im Wesentlichen im mittleren Bereich der Karosserie (1a) des Translifters (1) angeordnet ist.

10. Ein Translifter nach einem der vorhergehenden Ansprüche, **dadurch gekennzeichnet, dass** mindestens eine Sensorvorrichtung (6) ein Laserscanner oder ein Bildverarbeitungssystem ist, das sich am vorderen Ende der Karosserie (1a) befindet.

11. Ein Translifter nach einem der vorhergehenden Ansprüche 7-10, **dadurch gekennzeichnet, dass** in Verbindung mit dem Translifter (1) Mittel zur Verwendung der von den Sensorvorichtungen (6) erhaltenen Messdaten vorgesehen sind, um die Position des Anhängepunktes (7) in der seitlichen Richtung in Bezug auf die Mittellinie (8) des Translifters (1) zu verändern.

12. Ein Translifter nach einem der vorhergehenden Ansprüche 7-11, **dadurch gekennzeichnet, dass** in Verbindung mit dem Translifter (1) Steuer- und Einstellmittel zur Verwendung der von den Sensorvorichtungen (6) erhaltenen Messdaten vorgesehen sind, um die Position des Anhängepunktes (7) in der seitlichen Richtung in Bezug auf die Mittellinie (8) des Translifters (1) automatisch zu verändern.

## Revendications

1. Transélévateur servant à lever des charges sensiblement lourdes et/ou de grande taille qui se trouvent sur une plate-forme de chargement, le transélévateur (1) comprenant un corps allongé (1a) pourvu de roues (4), lequel corps est conçu pour être entraîné sous une charge sur une plate-forme de chargement, et également un mécanisme de levage (5) pour déplacer le corps (1a) vers le haut et vers le bas dans un sens sensiblement vertical et une barre de traction (2) pourvue d'un point d'attache (7) sur la première extrémité du corps (1a) pour connecter le transélévateur (1) à un tracteur, **caractérisé en ce que** le transélévateur (1) comprend un mécanisme de transfert (3) pour déplacer l'emplacement du point d'attache (7) dans le sens latéral depuis la ligne centrale longitudinale (8) du transélévateur (1), et que le mécanisme de transfert (3) du point d'attache (7) se trouve à l'extrémité libre de la barre de traction (2) et comprend un moyen de transfert latéral (3f) pour déplacer l'emplacement du point d'attache (7) dans le sens latéral depuis la ligne centrale longitudinale (8) du transélévateur (1).

2. Transélévateur selon la revendication 1, **caractérisé en ce que** le mécanisme de transfert (3) se trouve sur la barre de traction (2).

3. Transélévateur selon la revendication 1 ou 2, **caractérisé en ce que** le mécanisme de transfert (3) se trouve entre le corps (1a) et le tracteur (11) déplaçant le transélévateur (1).

4. Transélévateur selon la revendication 1, 2 ou 3, **caractérisé en ce que** la barre de traction (2) comprend une première partie (2a), qui est fixée à l'extrémité avant (1b) du corps (1a) du transélévateur (1), et une seconde partie (2b), qui est connectée à la première partie (2a) avec un mécanisme de transfert (3) pivotant par rapport à la première partie (2a).

5. Transélévateur selon la revendication 4, **caractérisé en ce que** le mécanisme de transfert (3) est un mécanisme d'articulation comprenant une broche de pivotement sensiblement verticale (3a) et au moins un actionneur (3d) pour faire pivoter la seconde partie (2b) de la barre de traction (2) par rapport à la première partie (2a) de la barre de traction (2) autour de la broche de pivotement (3a).

6. Transélévateur selon la revendication 5, **caractérisé en ce que** la broche de pivotement (3a) se trouve à une distance horizontale (s1) de la première extrémité (1b) du corps (1a) du transélévateur (1).

7. Transélévateur selon l'une quelconque des revendications précédentes, **caractérisé en ce que,** sur le corps (1a) du transélévateur (1) se trouvent un ou plusieurs moyens de détection (6) pour mesurer la position du corps (1a) par rapport à la plate-forme de chargement, comme une cassette (10), supportant la charge.

8. Transélévateur selon la revendication 7, **caractérisé en ce que** le moyen de détection (6) se trouve se trouve sur ou plusieurs flancs extérieurs du corps (1a) du transélévateur (1).

9. Transélévateur selon la revendication 7 ou 8, **caractérisé en ce qu'**au moins un moyen de détection (6) est situé dans le sens longitudinal sensiblement dans la zone centrale du corps (1a) du transélévateur (1).

10. Transélévateur selon l'une quelconque des revendications précédentes, **caractérisé en ce qu'**au moins un moyen de détection (6) est un système de vision par scanner laser ou mécanique qui se trouve sur l'extrémité avant du corps (1a).

11. Transélévateur selon l'une quelconque des revendications précédentes 7 à 10, **caractérisé en ce que** sont en connexion avec le transélévateur (1) des moyens d'utilisation des données de mesure reçues du moyen de détection (6) pour modifier la position du point d'attache (7) dans le sens latéral par rapport à la ligne centrale (8) du transélévateur (1).

12. Transélévateur selon l'une quelconque des revendications précédentes 7 à 11, **caractérisé en ce que** sont en connexion avec le transélévateur (1) des moyens de commande et de réglage pour utiliser les données de mesure reçues du moyen de détection (6) afin de modifier automatiquement la position du point d'attache (7) dans le sens latéral par rapport à la ligne centrale (8) du transélévateur (1).
